(19) **Europäisches Patentamt / European Patent Office / Office européen des brevets**

(11) **EP 1 790 195 B1**

(12) **EUROPEAN PATENT SPECIFICATION**

(45) Date of publication and mention of the grant of the patent:
**28.10.2015 Bulletin 2015/44**

(21) Application number: **05793022.4**

(22) Date of filing: **26.08.2005**

(51) Int Cl.:
**H04R 5/00** (2006.01)

(86) International application number:
**PCT/US2005/030471**

(87) International publication number:
**WO 2006/026463 (09.03.2006 Gazette 2006/10)**

(54) **METHOD OF MIXING AUDIO CHANNELS USING CORRELATED OUTPUTS**

VERFAHREN ZUM MISCHEN VON AUDIOKANÄLEN UNTER VERWENDUNG KORRELIERTER AUSGABEN

PROCEDE DE MELANGE DE CANAUX AUDIO AVEC DES SORTIES EN CORRELATION

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.08.2004 US 930659**

(43) Date of publication of application:
**30.05.2007 Bulletin 2007/22**

(60) Divisional application:
**11182055.1 / 2 400 783**

(73) Proprietor: **DTS, Inc.**
**Calabasas, CA 91302 (US)**

(72) Inventor: **SMITH, William, Paul**
**Bangor, CO. Down N. Ireland, BT203TL (GB)**

(74) Representative: **Jennings, Michael John et al**
**A.A. Thornton & Co.**
**10 Old Bailey**
**London EC4M 7NG (GB)**

(56) References cited:
| | |
|---|---|
| WO-A1-99/14983 | WO-A2-03/094369 |
| US-A- 4 819 269 | US-A- 5 128 999 |
| US-A- 5 610 986 | US-A- 5 870 480 |
| US-A1- 2002 071 574 | US-B1- 6 624 873 |

**EP 1 790 195 B1**

**Description**

BACKGROUND OF THE INVENTION

Field of the Invention

This invention relates to mixing of audio signals and more specifically to a mix or downmix of two or more audio channels using a correlated output.

Description of the Related Art

Multi-channel audio has received enthusiastic acceptance by movie watchers in both traditional theater and home theater venues as it provides a true "surround sound" experience far superior to mixed stereo content. Dolby AC3 (Dolby digital) audio coding system is a world-wide standard for encoding stereo and 5.1 channel audio sound tracks. DTS Coherent Acoustics is another frequently used multi-channel audio coding system. DTS Coherent Acoustics is now being used to provide multi-channel music for special events and home listening via broadcast, CDs and DVDs 5.1, 6.1, 7.1, 10.2 and other multi-channel formats

Car audio systems have over the years advanced from mono to stereo to the multi-speaker systems standard in most every automobile today. However, most content is still provided in a 2-channel stereo (L,R) format. The audio system mixes and delays the two channels to the multi-speaker lay out to provide an enhanced audio experience. However with the growing availability of multi-channel music, multi-channel audio systems are being implemented in automobiles to provide passengers with a "surround sound" experience.

Although a significant improvement over existing audio systems, the confines of the car and proximity of passengers to particular speakers affect the surround-sound experience. In general, the desired mix embodied in the multi-channel format may become "unbalanced". For example, a passenger sitting in the front passenger's seat may here too much of the discrete R channel that is emanating from the front right speaker effectively losing some of the benefits of the surround sound presentation. Even more extreme, a passenger in the back seat may here only the surround sound channels.

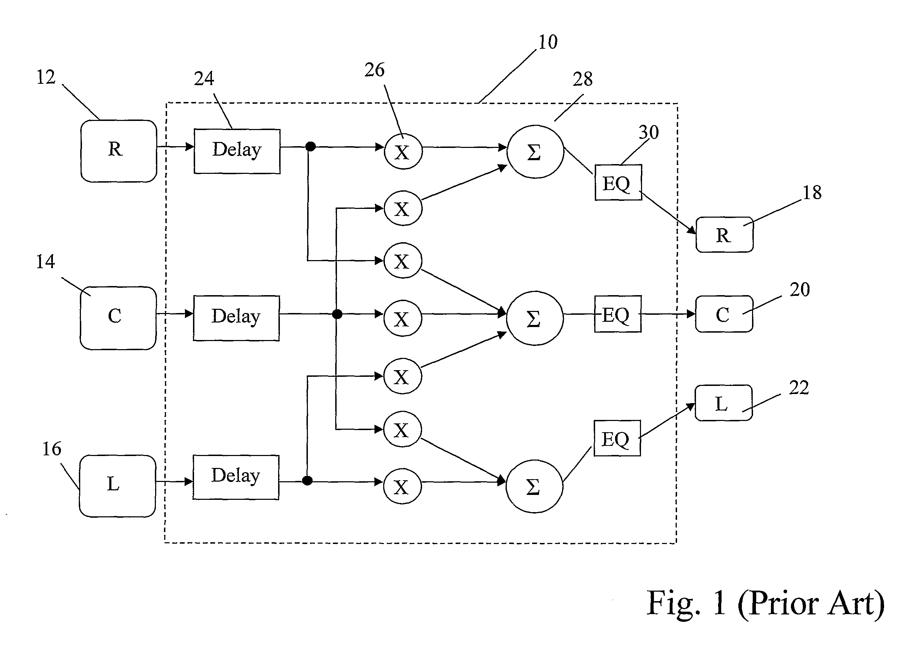

As a result, automakers have found that some amount of remixing of the discrete channels can reestablish the desired balance and improve the surround sound experience for everyone in the car. As shown in Figure 1, a typical mixer **10** remixes the discrete R,C,L input channels **12,14,16** into R,C,L output channels **18,20,22** for an automobile. Each channel is passed through a delay **24** and mixed (multiplied by gain coefficients Gi **26** and summed **28)** with the adjacent channels. Standard mixing equations are:

$$R = G1*R + G2*C$$

$$C = G3*C + G4*L + G5*R,$$

and

$$L = G6*L + G7*C.$$

The mixed channels are passed through equalizers **30** to the output channels **18,20,22** for playback on the L,C,R channel speakers in the automobile.

Although this approach is generally effective at rebalancing the audio to provide a reasonable surround-sound experience for every passenger in the automobile there are a few potential problems. This approach may introduce unwanted artifacts when two channels include the same or very similar content but with a relative time or phase delay. Furthermore, this approach may over mix the signals that were assigned to a specific channel thereby degrading the "discreteness" of the multi-channel audio.

US 5,610,986 discloses an audio-imaging system which includes at least first and second input channels for receiving first and second channel audio input signals and at least first, second and third output signals which are produced as a combination of the first and second channel audio input signals and a nonzero parameter. The parameter is common to the first, second and third output signals and may be made adjustable in order to vary the width of the audio image produced in order to compensate for composition mixing of a program source applied to the input channels.

A sound-image analyzer is also provided which processes a program source applied to the input channels to at least three fully separated levels representing left, right and center directions of the program source in order to determine a value of the parameter.

WO 99/14983 discloses an apparatus for creating, utilizing a pair of oppositely opposed headphone speakers, the sensation of a sound source being spatially distant from the area between the pair of headphones, the apparatus comprising: (a) a series of audio inputs representing audio signals being projected from an idealised sound source located at a spatial location relative to the idealised listener; (b) a first mixing matrix means interconnected to the audio inputs and a series of feedback inputs for outputting a predetermined combination of the audio inputs as intermediate output signals; (c) a filter system of filtering the intermediate output signals and outputting filtered intermediate output signals and the series of feedback inputs, the filter system including separate filters for filtering the direct response and short time response and an approximation to the reverberant response, in addition to the feedback response filtering for producing the feedback inputs; and (d) a second matrix mixing means combining the filtered intermediate output signals to produce left and right channel stereo outputs.

WO 03/094369 discloses a method and system for generating one or more mix coefficients for downmixing a multichannel input signal having a plurality of input channels, to an output signal having a plurality of output channels. Mix coefficients may be generated responsive to a comparison of energy between the dowmixed (output) signal and the input signal to the dowmixer, such that energy and intended direction of the input signal are substantially preserved in the output signal. Further, or in the alternative, the mix coefficient generation may preserve an intended direction of an input signal, for example, received at a surround input channel, in at least one output channel of the output signal. The mix coefficient values may be generated in a test downmixer environment. Additionally, one or more mix coefficients may be generated by retrieving predetermined mix coefficient values. Additionally, or in the alternative, one or more mix coefficients may be generated responsive to an input energy of a plurality of the input channels.

US 2002/071574 discloses a method of combining audio channel signals including shifting the phase of a first audio signal relative to a second audio signal. In one example, the relative phase shifting is substantially limited to a predetermined frequency range.

US 6,624,873 discloses a method for providing more than two surround sound channels within the format of a digital soundtrack system designed to provide only two surround sound channels by matrix encoding from three to five additional surround sound channels into two "discrete" surround sound channels. The digital audio stream of the digital soundtrack system designed to provide only two surround sound channels remains unaltered, thus providing compatibility with existing playback equipment. The format of the media carrying the digital soundtracks also is unaltered. The "discreteness" of the digital soundtrack system is not audibly diminished by employing matrix technology to surround sound channels, particularly if active matrix decoding is employed.

US 5,128,999 discloses a sound field correcting apparatus for adding indirect sound signals to audio signals from a decoder when a steering emphasis operation is not executed in the decoder and for limiting the addition of the indirect sound signals when the steering emphasis operation has been performed by the decoder. Thus, a reproduction sound having a proper extent feeling and a movement feeling of a sound image is obtained in accordance with a scene of a video image.

US 4,819,269 discloses a method and system in which direct field sound, represented by the sum of left and right stereo input signals, is projected in a narrow dispersion pattern from a front radiating speaker and reverberant field sounds, represented by difference between left and right stereo input signals, is projected from speakers having a wide dispersion pattern. Direct field and reverberant field sounds are acoustically combined in space to create an improved representation of stereo sound.

US 5,870,480 discloses a sound reproduction system for converting stereo signals on two input channels, which may have been directionally encoded from a four or five channel original using a phase/amplitude film matrix encoder, such signals including at least one component which is directionally encoded through a phase and amplitude encoding device and at least one component that is not directionally encoded but is different in the two input channels, into signals for multiple output channels, for example center, front left, front right, side left, side right, rear left, and rear right, including decoding apparatus for enhancing the directionally encoded component of the input signals in the desired direction and reducing the strength of such signals in channels not associated with the encoded direction, while preserving both the maximum separation between the respective left and right channels and the total energy of the non-directionally encoded component of the input channels in each output channel, such that the instruments recorded on the right input channel stay on the right side of the output channels and the instruments recorded on the left stay on the left side, and the apparent loudness of all the instruments in all the output channels stays the same regardless of the direction of the directionally encoded component of the input signals; and further including circuits to improve separation in the decoder for uncorrelated left and right side inputs, to improve reproduction of apparent motion between the sides and the rear, to compensate for boost applied to signals in the front quarter of the sound field, and to limit the maximum excursion of each of the direction control signals when the other is changing.

SUMMARY OF THE INVENTION

The present invention provides a method of mixing audio channels that is effective at rebalancing the audio or downmixing audio channels without introducing unwanted artifacts or overly degrading the discrete presentation of the original audio.

This is accomplished between any two or more input channels by processing the audio channels to generate one or more "correlated" audio signals for each pair of input channels. The correlated audio signal(s) are then mixed with the input audio channels to provide the output channels. The correlator can be implemented using any suitable technology including but not limited to Neural Networks, Independent Component Analysis (ICA), Adaptive Filtering or Matrix Decoders.

In one embodiment, only the in-phase correlated signal is mixed with the two input channels. The in-phase correlated signal represents the same or very similar signals that are present in both channels and in-phase (no or minimal time delay). By mixing only this portion of the audio signals we are able to achieve the desired rebalancing without introducing unwanted artifacts or degrading the discreteness of multi-channel audio.

In another embodiment, the correlation process provides the in-phase correlated signal, an out-of-phase correlated signal (same or similar signals with appreciable time or phase delay) and one or more independent signals (signals not present in the other input channel) that are mixed with the input channels. This approach provides more mixing

flexibility. The mixer may set the mixing coefficients of the out-of-phase and independent signals to zero thereby achieving the same results as if only the in-phase correlated signal were mixed. Or the mixer may simply lower the coefficients in these signals to provide a smoother mix. In other applications, the mixer may want to reduce or remove the out-of-phase signal but retain some of the independent signal. For example, in a 3:2 downmix from L,C,R input channels to L,R output channels it may be desirable to mix the independent C channel signals into the L and R output channels.

These and other features and advantages of the invention will be apparent to those skilled in the art from the following detailed description of preferred embodiments, taken together with the accompanying drawings, in which:

BRIEF DESCRIPTION OF THE DRAWINGS

FIG. 1, as described above, is a known configuration for mixing the discrete L, C and R audio channels in an automobile to improve the surround-sound experience;

FIG. 2 is a configuration for mixing the discrete L, C and R audio channels using the correlated outputs between the L and C and R and C channels in accordance with the present invention;

FIG. 3 is a block diagram of a correlator generating a correlated output;

Fig. 4 is a block diagram of a correlator generating correlated, out-of-phase and independent outputs;

FIGs. 5a through 5h are simplified diagrams showing time and frequency domain representations of the L and R input channels and frequency domain representations of 2:1 and 4:1 correlated outputs;

FIG. 6 is a block diagram of an embodiment of the correlator using a 2:4 matrix decoder;

FIG. 7 is a simplified block diagram of an automobile audio system;

FIG. 8 is a block diagram of the multi-channel mixer; and

FIG. 9 is a block diagram of the multi-channel mixer that exploits the downmix capabilities of the correlator shown in FIG. 4 in an automobile.

DETAILED DESCRIPTION OF THE INVENTION

The application of multi-channel audio to automobiles revealed the desirability for remixing of the discrete audio channels to provide a more uniform surround sound experience for all passengers. However, although a straightforward mix was effective at rebalancing the multi-channel audio this approach could produce unwanted artifacts. If, for example, the R and C channels included the same or very similar content with appreciable phase or time delays, remixing these two channels could produce phase distortion and/or amplitude distortion. Furthermore, much of the desirability of multi-channel audio stems from the discrete unmixed presentation of the audio channels. The remixing process may soften the discrete presentation of the audio.

Therefore, the present invention provides a method of mixing audio channels that is effective at rebalancing the audio without introducing unwanted artifacts or overly softening the discrete presentation of the original audio. This is accomplished between any two or more input channels by processing the audio channels to generate one or more "correlated" audio signals for each pair of input channels. The in-phase correlated signal representing content in both channels that is the same or very similar with little or no phase or time delay is mixed with the input channels. The present approach may also generate an out-of-phase correlated signal (same or similar signals with appreciable time or phase delay) that is typically discarded and a pair of independent signals (signals not present in the other input channel) that may be mixed with the input channels. The provision of both the in-phase correlated signal and the pair of independent signals makes the present approach well suited for the downmixing of audio channels as well.

Although the techniques were developed in the context of improving the surround sound experience provided by multi-channel audio in a automobile, the present invention is generally applicable to any two or more audio channels in which mixing occurs in any setting.

## Mixing with Correlated Outputs

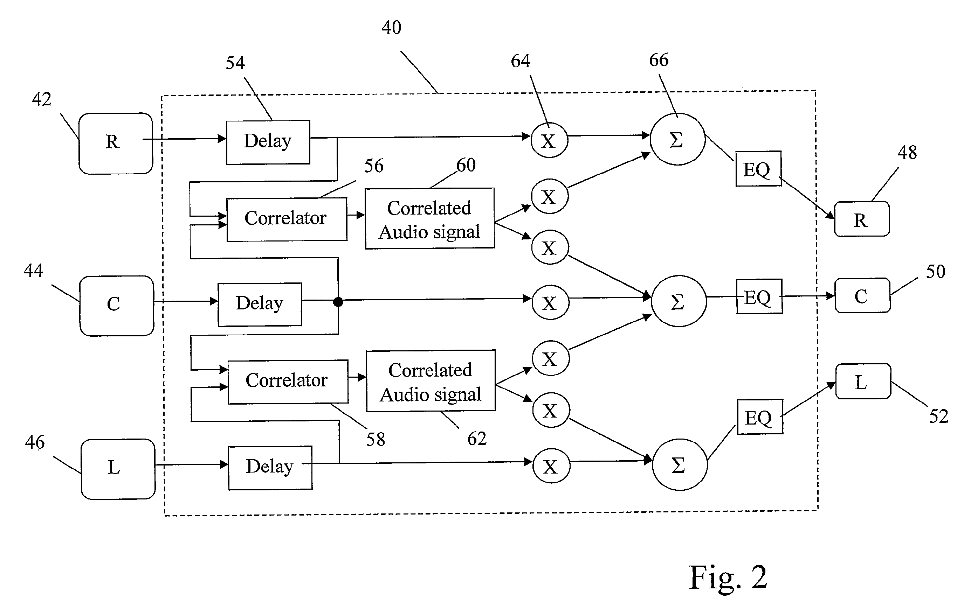

As shown in Figure 2, a mixer **40** remixes the discrete R,C,L input channels **42,44,46** into R,C,L output channels **48,50,52** for an automobile. Each channel is passed through a delay **54**. The R and C and L and C channels are input to correlators **56** and **58,** respectively, which generate correlated audio signals **60** and **62**. These correlated audio signals **60** and **62** are mixed (multiplied by gain coefficients Gi **64** and summed **66)** with the adjacent channels. The mixed channels are passed through equalizers **68** to the output channels **48,50,52** for playback on the L,C,R channel speakers in, for example, the automobile.

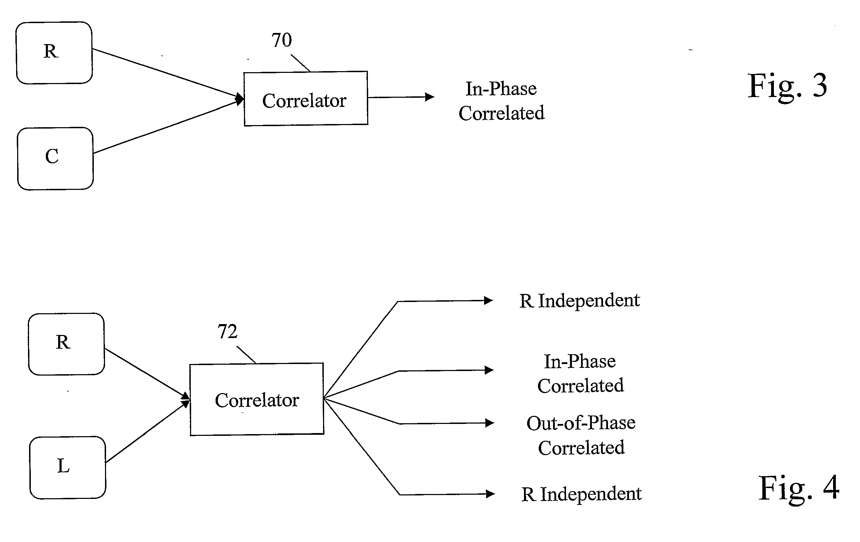

The correlators **56** and **58** can be implemented using any suitable technology including but not limited to Neural Networks, Independent Component Analysis (ICA), Adaptive Filtering or Matrix Decoders. As shown in Figure 3, a correlator **70** can be configured to produce a single in-phase correlated audio signal (LCC, RCC) that is mixed as follows:

$$R = G8*R + G9*RCC \qquad\qquad (1)$$

$$C = G10*C + G11*LCC + G12*RCC, \text{ and} \qquad (2)$$

$$L = G13*L + G14*LCC. \qquad\qquad (3)$$

In this approach, the out-of-phase correlated signals and independent signals are removed. Of course there are no bright lines or clear definitions that separate in-phase from out-of-phase and correlated from independent. How these components of the audio content are separated will depend upon the technology used to implement the correlator and the desired characteristics of the correlated signal. In some applications it may be desirable to retain only very high correlated signals. In other applications, it may be desirable to retain some of the out-of-phase and independent signals.

As shown in Figure 4, this desire for increased flexibility can be accommodated with a correlator **72** that is configured to produce an in-phase correlated audio signal (RIP,LIP), an out-of-phase correlated audio signal (ROP,LOP) and L and R independent audio signals(RCI,CRI and LCI,CLI). In general, each of these components can be mixed in accordance with mixing equations:

$$R = G15*R + (G16*RIP + G17*ROP + G18*RCI + G19*CRI) \quad (4)$$

$$C = G20*C + (G21*LIP + G22*LOP + G23*LCI + G24*CLI)+$$
$$(G25*RIP + G26*ROP + G27*RCI + G28*CRI), \text{ and} \qquad (5)$$

$$L = G29*L + (G30*LIP + G31*LOP + G32*LCI + G33*CLI). \quad (6)$$

Similar to above how these different correlated components are computed will depend upon the implementing technology and the desired characteristics of the different components.

In a typical implementation, the out of phase components and the independent components for that output channel may be discarded. In this case the equations simplify to:

$$R = G15*R + (G16*RIP + G19*CRI) \qquad\qquad (7)$$

$$C = G20*C + (G21*LIP + G23*LCI) + (G25*RIP + G27*RCI), \text{ and} \tag{8}$$

$$L = G29*L + (G30*LIP + G33*CLI) \tag{9}$$

leaving only the in-phase correlated signals and the independent signals from the other channel.

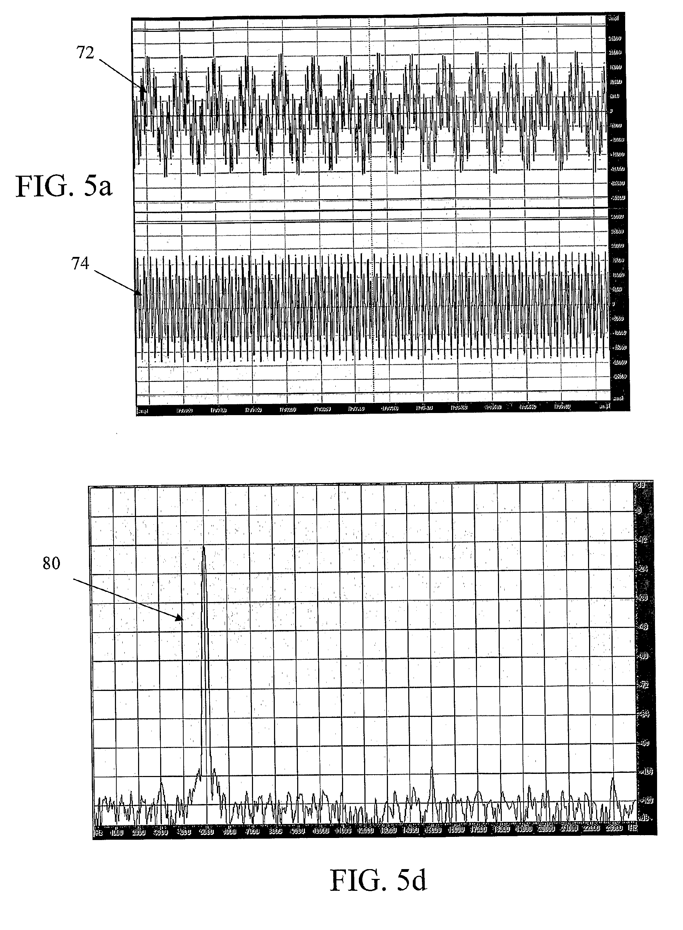

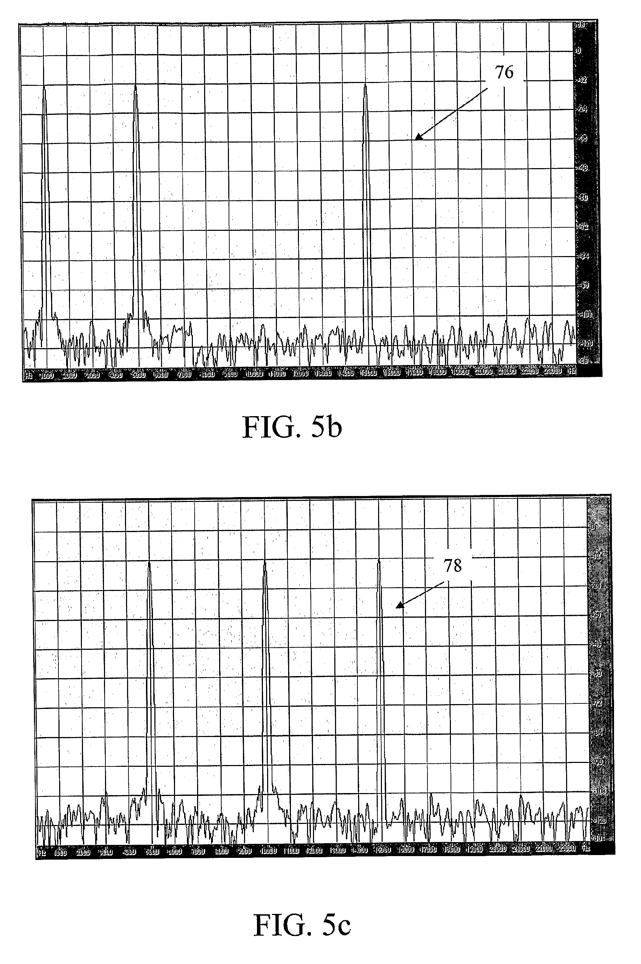

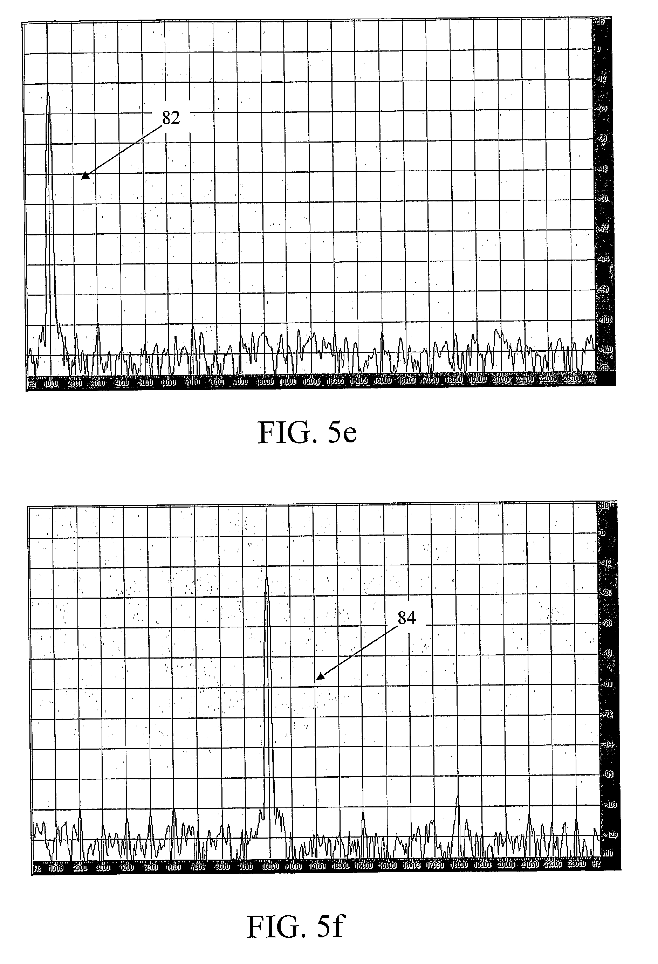

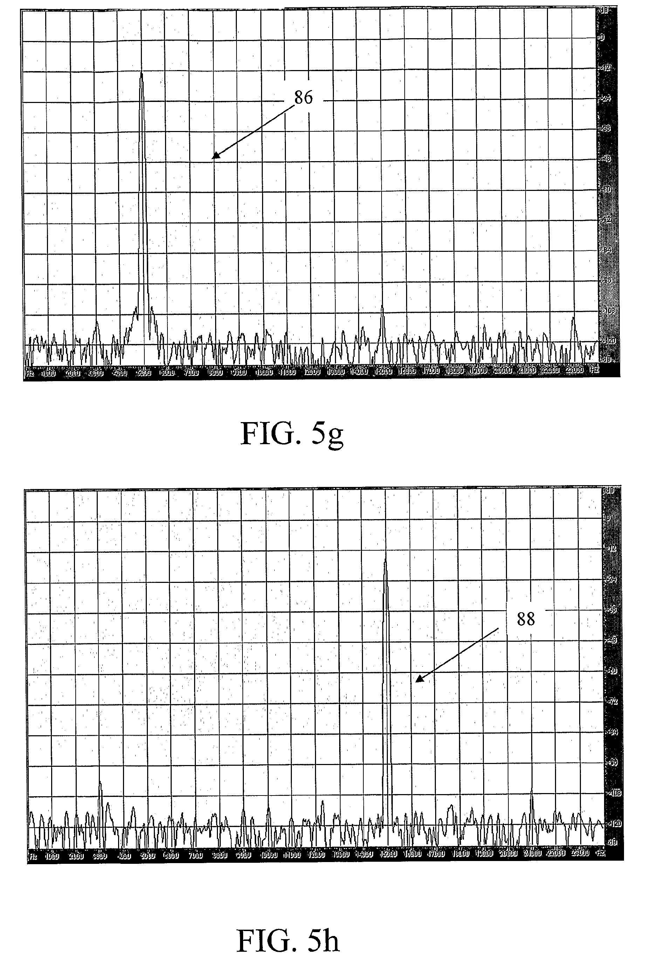

Figures 5a through 5h illustrate a simple four tone example highlighting the benefits and flexibility provided by mixing correlated outputs. In this example, the L channel includes a 1kHz tone, a 5kHz tone and a 15kHz tone. The R channel has a 5 kHz tone, a 10 kHz tone and a 15 kHz tone. The 5 kHz tones are in phase and correlated. The 15 kHz tones are out of phase. The time domain waveforms **72** and **74** for the L (top) and R (bottom) channels are shown in Figure 5a. The frequency content **76** and **78** of the L and R channels are shown in Figures 5b and 5c, respectively.

A 2:1 correlator of the type illustrated in Figure 3 above, produces a single in-phase correlated audio signal **80** as shown in Figure 5d. This signal can then be mixed with either or both the left and right channels to rebalance the 5kHz tone without introducing any phase or amplitude distortions associated with the out-of-phase 15 kHz tones or mixing in any of the independent audio signals, 1kHz into the R channel or 10kHz in the L channel.

A 2:4 correlator of the type illustrated in Figure 4 above, produces an independent L signal **82** at 1kHz, independent R signal **84** at 10kHz, in-phase correlated signal **86** at 5kHz, and an out-of-phase correlated signal **88** at 15kHz as shown in Figure 5e-5h. These signals can then be independently mixed with either or both the left and right channels. In some cases only the in-phase correlate signal **86** will be mixed and the other discarded or set to zero. Alternately, the mixer may prefer to add a small component of these other signals. For example, in a 3:2 downmix in which the C channel does not have a discrete speaker, it may be necessary to mix some of the independent signals.

**Correlator Implementations**

Matrix Decoder

As mentioned above, the correlator may be implemented using a matrix decoder. The earliest multi-channel systems matrix encoded multiple audio channels, e.g. left, right, center and surround (L,R,C,S) channels, into left and right total (Lt,Rt) channels and recorded them in the standard stereo format. The Prologic encoder 4 matrix encodes this mix as follows:

$$Lt = L +.707C + S(+90°), \text{ and} \tag{10}$$

$$Rt = R + .707C + S(-90), \tag{11}$$

A matrix decoder decodes the two discrete channels Lt,Rt and expands them into four discrete reconstructed channels L,R,C and S that are amplified and distributed to a five speaker system. Many different proprietary algorithms are used to perform an active decode and all are based on measuring the power of Lt+Rt (C), Lt-Rt (S), Lt (L) and Rt (R) to calculate gain factors Hi whereby,

$$L = H1*Lt + H2*Rt \tag{12}$$

$$R = H3*Lt + H4*Rt \tag{13}$$

$$C = H5*Lt + H6*Rt, \text{ and} \tag{14}$$

$$S = H7*Lt + H8*Rt. \tag{15}$$

More specifically, Dolby Pro Logic provides a set of gain factors for a null point at the center of a five-point sound field. The Pro Logic decoder measures the absolute power of the two-channel matrix encoded signals Lt and Rt and calculates power levels for each of the L, R, C and S channels. These power levels are then used to calculate L/R and C/S dominance vectors whose vector sum defines a single dominance vector in the five-point sound field from which the single dominant signal should emanate. The power levels and dominance vectors are time averaged to improve stability. The decoder scales the set of gain coefficients at the null point according to the dominance vectors to provide gain factors Hi.

DTS Neo:6 decoder includes a multiband filter bank, a matrix decoder and a synthesis filter, which together decode Lt and Rt and reconstruct the multi-channel output. Neo:6 computes L/R and C/S dominance vector for *each subband* and averages them using both a slow and fast average. Neo:6 uses the dominance vector to map the Lt, Rt subband signals into an expanded 9-point sound field. Neo:6 computes gain coefficients for the vector in each subband based on the values of the gain coefficients in the sound field. This allows the subbands to be steered independently in a sound field that observes the motion picture channel configuration.

Matrix Decoder as a Correlator

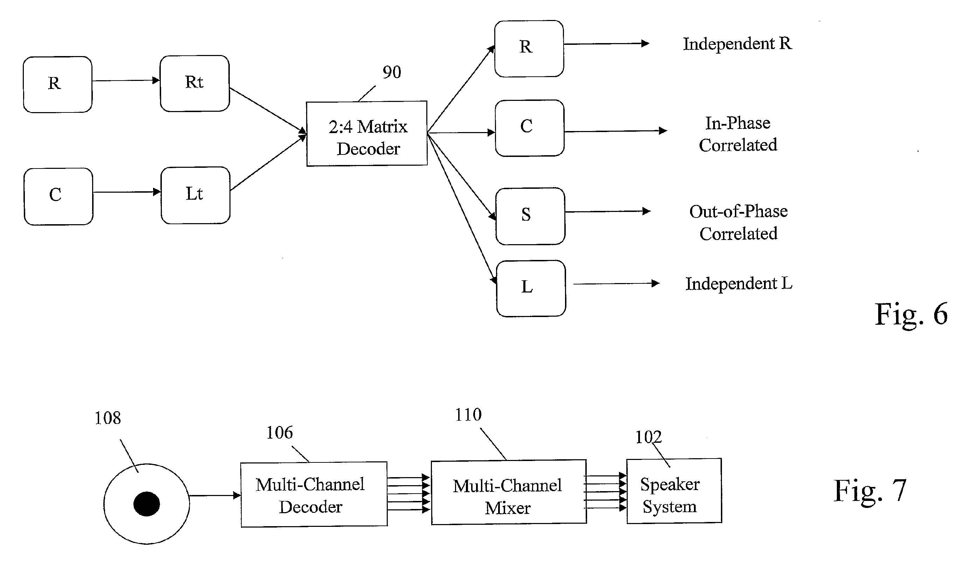

As shown in Figure 6, a 2:4 matrix decoder **90** is designed to deconstruct Lt and Rt to reconstruct the L, R, C and S channels as encoded in equations 10 and 11. An analysis of these equations shows that the L and R channels are independent in Lt and Rt, the C channel is perfectly correlated and the S channel is 180° out-of-phase.

Therefore, as shown in Figure 6, if Lt and Rt are simply two audio channels, and not matrix encoded channels, then the reconstructed C channel will represent any in-phase correlated audio signals in Lt and Rt, the reconstructed S channel will represent any out-of-phase correlated audio signals and the reconstructed L and R channels will represent independent audio signals from the two input audio channels. Note, a 2:3 matrix decoder in which the S channel is mixed into the L and R channels can be used if only the in-phase correlated signal is required.

The specific algorithm used to calculate the gain factors Hi will determine the degree of correlation, phase shift or independence captured in each of these channels. To illustrate, consider the following idealized cases:

Case 1: Lt, Rt highly correlated (Lt = Rt)

$$
\begin{array}{lll}
\text{L H1 and H2} = & 0.354, & -0.354, \\
\text{C H1 and H2} = & 0.707, & 0.707, \\
\text{R H1 and H2} = & -0.354, & 0.354, \\
\text{S H1 and H2} = & 0.707, & -0.707,
\end{array}
$$

In this case, L, R and S will be 0 and C will contain equal amounts of both L and R. As expected, in-phase contribution will be large and the other components will be zero.. Depending on where the steering vector ends up new coefficients are calculated from a grid of optimal ones using interpolation

Case 2: Lt, Rt complete out of phase (Lt = -1.0*Rt)

$$
\begin{array}{lll}
\text{L G1 and G2} = & 0.354, & 0.354, \\
\text{C G1 and G2} = & 0.5, & 0.5, \\
\text{R G1 and G2} = & 0.354, & 0.354, \\
\text{S H1 and H2} = & 0.707, & -0.707,
\end{array}
$$

In this case, all of the outputs will be zero.

Case 3: Lt is dominate (Rt = 0)

$$
\begin{array}{lll}
\text{L H1 and H2} = & 1.0, & 0.0,
\end{array}
$$

$$
\begin{array}{lll}
\text{C H1 and H2} = & 0.0, & 0.5, \\
\text{R H1 and H2} = & 0.0, & 0.707, \\
\text{S H1 and H2} = & 0.0, & -1,
\end{array}
$$

In this case, all of the outputs are zero except for the left channel which contains the left input.

**EP 1 790 195 B1**

**Multi-Channel Automotive Audio System**

As discussed above the motivation for the present invention was to improve the surround sound experience provided by multi-channel audio such as provided by Dolby AC3 or DTS Coherent Acoustics. By mixing correlated audio signals, the multi-channel mixer provides the desired rebalanced of the multi-channel audio without producing unwanted artifacts or softening the discrete presentation of the audio.

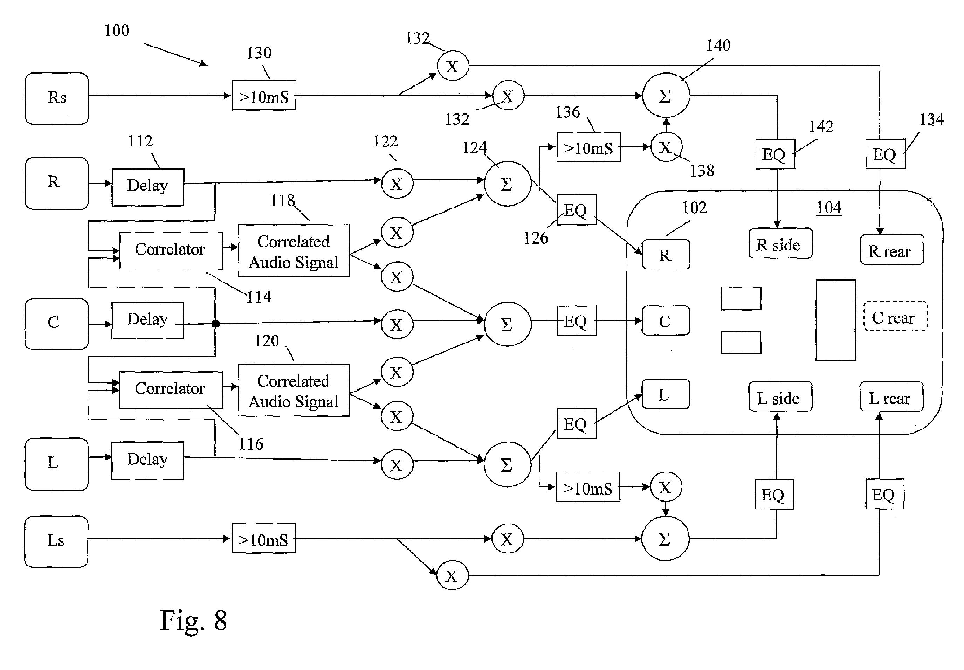

As shown in Figures 7 and 8, a typical automotive sound system **100** a plurality of speakers **102** including at least L front and R front in the passenger cabin **104** of the car. In this example, speaker system also includes C front, R and L side and R and L rear and may include a C rear. A multi-channel decoder **106** decodes multi-channel encoded audio from a disk **108** (or broadcast) into multiple discrete audio input channels including at least L front, C front and R front. In this 5.1 channel format right Rs and left Ls surround channels are also provided. The .1 or low frequency channel is not shown.

A multi-channel mixer **110** mixes the discrete R,C,L channels using correlated outputs into the R,C,L channels for the respective speakers. Each channel is passed through a delay **112**. The R and C and L and C channels are input to correlators **114** and **116,** respectively, which generate correlated audio signals **118** and **120**. These correlated audio signals **118** and **120** are mixed (multiplied by gain coefficients Gi **122** and summed **124)** with the adjacent channels. The mixed channels are passed through equalizers **126** to the R,C, L output channels for playback on the R,C,L channel speakers.

In this particular application 5.1 audio is being mixed into a 7 speaker system, which is not uncommon. Because of typical home speaker configurations, 5.1 content is more common but many cars use 7 speaker systems. In this case the Rs and Ls discrete channels are mixed to the R side and R read and L side and L rear, respectively. The Rs (Ls) channel is passed through a delay **130,** split and multiplied by mixing coefficients **132**. One branch is passed through an equalizer **134** and provided to the R read (L rear). The other branch is mixed with the mixed R (L) channel (delay **136,** mixing coefficient **138,** and summing node **140),** passed through an equalizer **142** and provided to the R side (L side).

If the content were provided in a 7.1 format, the R, R side and R rear discrete audio channels could be mixed using correlated outputs in a manner similar to that described for the R,C,L. The left side channels could be similarly mixed. Furthermore, if the audio was available in an 8.1 format and the speaker system included a C rear speaker, all of the rear speakers could be so mixed.

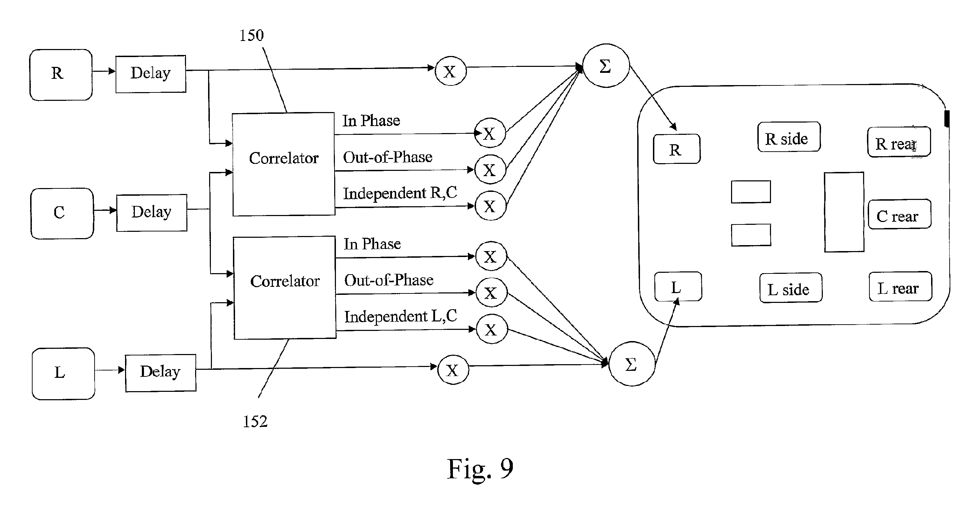

As shown in Figure 9, the speaker system in the car is not provided with a C front speaker. The 3 front channels (R,C,L) must be downmixed into only 2 channels (R,L). This is a common occurrence in non-automotive applications where the C channel speaker does not exist. The C channel is simply mixed into both the L and R speakers. In the automotive setting, the same approach can be taken. However, the ideal coefficients for mixing the C channel may not be the same as the desired coefficients for rebalancing and further may create unwanted artifacts do to the out-of-phase correlated signals between the input channels.

Instead, the correlators **150** and **152** generate the in-phase, out-of-phase, and pair of independent audio signals. The mixer now has the flexibility to mix the in-phase components as needed to rebalance the signal, discard the out-of-phase components to avoid phase distortion and mix the independent C channel to preserve the audio signals in that channel.

The capability to flexibly downmix N channels into M where N>M in this manner will have applicability outside automotive applications. For example, content is being generated for new exhibition venues with more discrete channels, e.g. 10.2. However, many of the commercial and consumer venues will have 5.1, 6.1 or 7.1 speaker configurations that will require downmixing.

While several illustrative embodiments of the invention have been shown and described, numerous variations and alternate embodiments will occur to those skilled in the art. Such variations and alternate embodiments are contemplated, and can be made without departing from the scope of the invention as defined in the appended claims.

**Claims**

**1.**   A method of mixing audio channels, comprising:

　　　　providing first, second and third audio input channels;
　　　　processing the first and second channels to provide a first in-phase correlated signal, a first out-of-phase correlated signal, and first and second independent signals;
　　　　processing the second and third channels to provide a second in-phase correlated signal, a second out-of-phase correlated signal, and third and fourth independent signals;
　　　　mixing the first in-phase correlated signal and the first and second independent signals with the first input channel into a first output channel; and

mixing the second in-phase correlated signal and the third and fourth independent signals with the third input channel into a second output channel.

2. The method of claim 1, wherein:

the first out-of-phase correlated signal is also mixed with said first in-phase correlated signal, said first and second independent signals and said first input channel into said first output channel; and
the second out-of-phase correlated signal is also mixed with said second in-phase correlated signal, said third and fourth independent signals and said third input channel into said second output channel.

3. The method of claim 1, wherein said processing the first and second channels and said processing the second and third channels is performed by 2:4 matrix decoding to provide the respective in-phase correlated signals, out-of-phase correlated signals and independent signals.

**Patentansprüche**

1. Verfahren zum Mischen von Audiokanälen, umfassend:

Bereitstellen eines ersten, zweiten und dritten Audioeingangskanals,
Verarbeiten des ersten und des zweiten Kanals, um ein erstes gleichphasiges korreliertes Signal, ein erstes phasenverschobenes korreliertes Signal und ein erstes und ein zweites unabhängiges Signal bereitzustellen,
Verarbeiten des zweiten und des dritten Kanals, um ein zweites gleichphasiges korreliertes Signal, ein zweites phasenverschobenes korreliertes Signal und ein drittes und ein viertes unabhängiges Signal bereitzustellen,
Mischen des ersten gleichphasigen korrelierten Signals und des ersten und des zweiten unabhängigen Signals mit dem ersten Eingangskanal in einen ersten Ausgangskanal und
Mischen des zweiten gleichphasigen korrelierten Signals und des dritten und vierten unabhängigen Signals mit dem dritten Eingangskanal in einen zweiten Ausgangskanal.

2. Verfahren nach Anspruch 1, wobei:

das erste phasenverschobene korrelierte Signal auch mit dem genannten ersten gleichphasigen korrelierten Signal, dem genannten ersten und zweiten unabhängigen Signal und dem genannten ersten Eingangskanal in den genannten ersten Ausgangskanal gemischt wird und
das zweite phasenverschobene korrelierte Signal auch mit dem genannten zweiten gleichphasigen korrelierten Signal, dem genannten dritten und vierten unabhängigen Signal und dem genannten dritten Eingangskanal in den genannten zweiten Ausgangskanal gemischt wird.

3. Verfahren nach Anspruch 1, wobei das genannte Verarbeiten des ersten und des zweiten Kanals und das genannte Verarbeiten des zweiten und des dritten Kanals von 2:4-Matrix-Decodieren durchgeführt wird, um die jeweiligen gleichphasigen korrelierten Signale, phasenverschobenen korrelierten Signale und unabhängigen Signale bereitzustellen.

**Revendications**

1. Procédé de mélange de canaux audio, comprenant :

la fourniture de premier, deuxième et troisième canaux d'entrée audio ;
le traitement des premier et deuxième canaux pour fournir un premier signal corrélé en phase, un premier signal corrélé déphasé, et des premier et deuxième signaux indépendants ;
le traitement des deuxième et troisième canaux pour fournir un second signal corrélé en phase, un second signal corrélé déphasé, et des troisième et quatrième signaux indépendants ;
le mélange du premier signal corrélé en phase et des premier et deuxième signaux indépendants avec le premier canal d'entrée dans un premier canal de sortie ; et
le mélange du second signal corrélé en phase et des troisième et quatrième signaux indépendants avec le troisième canal d'entrée dans un second canal de sortie.

**2.** Procédé selon la revendication 1, dans lequel
le premier signal corrélé déphasé est également mélangé avec ledit premier signal corrélé en phase, lesdits premier et deuxième signaux indépendants et ledit premier canal d'entrée dans ledit premier canal de sortie ; et
le second signal corrélé déphasé est également mélangé avec ledit second signal corrélé en phase, lesdits troisième et quatrième signaux indépendants et ledit troisième canal d'entrée dans ledit second canal de sortie.

**3.** Procédé selon la revendication 1, dans lequel ledit traitement des premier et deuxième canaux et ledit traitement des deuxième et troisième canaux sont exécutés par décodage par matrice 2:4 pour fournir les signaux corrélés en phase, les signaux corrélés déphasés et les signaux indépendants respectifs.

Fig. 1 (Prior Art)

EP 1 790 195 B1

Fig. 2

```
  ┌─────┐
  │  R  │ ─────────┐
  └─────┘           ╲              70
                     ╲          ┌──────────┐
                      ╲─────────│Correlator│──────────▶  In-Phase
                      ╱         └──────────┘            Correlated
  ┌─────┐           ╱
  │  C  │ ─────────┘
  └─────┘
```

Fig. 3

```
                                              ┌──────────────────▶ R Independent
                                             ╱
  ┌─────┐                                   ╱
  │  R  │ ─────────┐          72           ╱
  └─────┘           ╲      ┌──────────┐   ╱─────────────▶  In-Phase
                     ╲─────│Correlator│──┤                Correlated
                     ╱     └──────────┘   ╲─────────────▶  Out-of-Phase
  ┌─────┐           ╱                      ╲               Correlated
  │  L  │ ─────────┘                        ╲
  └─────┘                                    └──────────────▶ R Independent
```

Fig. 4

FIG. 5a

FIG. 5d

FIG. 5b

FIG. 5c

FIG. 5e

FIG. 5f

16

FIG. 5g

FIG. 5h

EP 1 790 195 B1

Fig. 6

Fig. 7

Fig. 8

EP 1 790 195 B1

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5610986 A
- WO 9914983 A
- WO 03094369 A
- US 2002071574 A
- US 6624873 B
- US 5128999 A
- US 4819269 A
- US 5870480 A